# EUROPEAN PATENT APPLICATION

(11) **EP 3 632 531 A1**
(43) Date of publication of application: **08.04.2020**
(21) Application number: 18806507.2
(22) Date of filing: 27.02.2018
(51) Int. Cl.: B01J 13/04, B01J 4/00

(54) **FLUID COMPOSITION PREPARATION APPARATUS**

(30) Priority: 21.05.2017 US 201762509181 P; 25.01.2018 KR 20180009549
(71) Applicant: LG Electronics Inc., Seoul 07336 (KR)
(72) Inventor: LEE, Kangsun, Seoul 06772 (KR); KIM, Seonghyok, Seoul 06772 (KR); SONG, Seungyeon, Seoul 06772 (KR); LEE, Younjae, Seoul 06772 (KR); LEE, Chaedeok, Seoul 07796 (KR)
(74) Representative: Ter Meer Steinmeister & Partner
(86) International application number: PCT/KR2018/002413
(87) International publication number: WO 2018/216888

(57) **Abstract**

The present invention relates to a fluid composition preparation apparatus and a fluid composition preparation system including the same, the apparatus being capable of preparing a double droplet-type fluid composition, and moving the prepared fluid composition by minimizing the shock thereof, the apparatus comprising: a first guide member for guiding the discharge of a first fluid; a second guide member in which the first guide member is disposed, which guides the discharge of a second fluid at the outer side of the first guide member, and which has a discharge part for discharging a droplet-type fluid composition in which the first fluid is accommodated in the second fluid; a guide conduit having a passage through which the fluid composition passes; and an opening for distributing, to the outside, the fluid composition which has passed through the guide conduit, wherein the guide conduit can have a shock-absorbing layer for minimizing deformation of the fluid composition discharged from the second guide member.

## Description

### TECHNICAL FIELD

The present invention relates to a fluid composition preparation apparatus.

### BACKGROUND ART

Microcapsules may be containers capable of wrapping a material at a microscopic size between several micrometers to several hundred micrometers. Water-soluble proteins such as gelatin and casein, carbohydrates such as cellulose, and synthetic polymers such as a copolymer of a vinyl compound and phthalic anhydride may be used.

When the microcapsules are used, a powder shape surrounding a liquid is made to be easily handled, a contained material is slowly discharged, materials, which react with each other when left as they are, are microencapsulated and isolated and then mixed with each other to react with each other as necessary, or used to prevent a material that is easily volatiliable from being volatilized.

The microcapsules may be used in various fields such as bio, pharmacy, beauty, and the like. For example, cosmetics in the form of microcapsules may be prepared in the beauty fields. When the microcapsule-type cosmetics containing moisture or proteins are used on the skin, the effect of the cosmetics may be maximized.

Thus, measures for easily preparing the microcapsules and minimizing a problem in which the prepared microcapsules are burst during the movement may be required.

### DISCLOSURE OF THE INVENTION

### TECHNICAL PROBLEM

The present invention provides a fluid composition preparation apparatus, which is capable of preparing a fluid composition having a double droplet-type fluid composition and capable of moving the prepared fluid composition by minimizing a shock of the fluid composition and a fluid composition preparation system including the same.

### TECHNICAL SOLUTION

A fluid composition preparation apparatus according to an embodiment of the present invention includes a first guide member configured to guide discharge of a first fluid, a second guide member in which the first guide member is disposed, which is disposed outside the first guide member to guide discharge of a second fluid, and which has a discharge part configured to discharge a droplet-type fluid composition in which the first fluid is accommodated in the second fluid, a guide conduit having a passage through which the fluid composition passes, and an opening configured to distribute the fluid composition passing through the guide conduit to the outside, wherein a shock-absorbing layer through which the fluid composition discharged from the second guide member passes is provided in the guide conduit.

The shock-absorbing layer may include a third fluid, and the third fluid may have a density less than that of the second fluid.

An air layer filled with air may be formed in the guide conduit, and the discharge part may be disposed on the air layer.

The discharge part may be disposed to be spaced a preset reference distance or more from the shock-absorbing layer.

The reference distance may increase as the fluid composition increases in size.

Each of the first fluid and the second fluid may have one of an oil phase and a water phase.

A product according to an embodiment of the present invention may be prepared by the fluid composition preparation apparatus including the first guide member configured to guide the discharge of the first fluid, the second guide member in which the first guide member is disposed, which is disposed outside the first guide member to guide the discharge of the second fluid, and which has the discharge part configured to discharge the droplet-type fluid composition in which the first fluid is accommodated in the second fluid, the guide conduit having the passage through which the fluid composition passes, and the opening configured to distribute the fluid composition passing through the guide conduit to the outside, wherein the shock-absorbing layer through which the fluid composition discharged from the second guide member passes is provided in the second guide member.

A fluid composition preparation system according to an embodiment of the present invention includes
at least one or more fluid composition preparation apparatuses, each of which comprises a first guide member configured to guide discharge of a first fluid, a second guide member which guides discharge of a second fluid and which has a discharge part for discharging a droplet-type fluid composition in which the first fluid is accommodated in the second fluid, a guide conduit having a passage through which the fluid composition passes, and an opening configured to distribute the fluid composition passing through the guide conduit to the outside, a first storage configured to store the first fluid, a first pump configured to move the first fluid stored in the first storage to the first guide member, a second storage configured to store the second fluid, a second pump configured to move the second fluid stored in the second storage to the second guide member, and a control unit configured to control the first pump and the second pump, wherein a shock-absorbing layer through which the fluid composition discharged from the second guide member passes is provided in the guide conduit.

The control unit may control a first speed at which the first pump is driven and a second speed at which the second pump is driven to adjust a size of the fluid composition.

### ADVANTAGEOUS EFFECTS

According to the embodiment of the present invention, there may be the advantage in which the double droplet-type fluid composition is stably prepared and moved to the container, and the like.

According to the embodiment of the present invention, there may be the advantage in which the double droplet-type fluid composition is uniformly distributed and more easily stored.

According to the embodiment of the present invention, there may be the advantage in which the fluid compositions having the various sizes and two or more fluid compositions are capable of being prepared, and the prepared fluid compositions having the various shapes are uniformly distributed.

### BRIEF DESCRIPTION OF THE DRAWINGS

FIG. 1 is a schematic view of illustrating an example of a fluid composition preparation system according to an embodiment of the present invention.
FIG. 2 is a block diagram illustrating components constituting the fluid composition preparation system illustrated in FIG. 1.
FIG. 3 is a view illustrating the inside of a fluid composition preparation apparatus according to an embodiment of the present invention.
FIG. 4 is a cross-sectional view illustrating a process of preparing a fluid composition in the fluid composition preparation apparatus illustrated in FIG. 3.
FIG. 5 is a view for explaining a principle of preparing the fluid composition in FIG. 4.
FIG. 6 is a view illustrating an example of a product prepared by the fluid composition preparation apparatus.
FIG. 7 is a view illustrating a fluid composition preparation system according to another embodiment of the present invention.
FIG. 8 is a view illustrating a fluid composition preparation system according to further another embodiment of the present invention.
FIG. 9 is a schematic block diagram illustrating the fluid composition preparation system for preparing fluid compositions having different sizes according to an embodiment of the present invention.
FIG. 10 is a view illustrating an example of a product prepared in FIG. 9.
FIG. 11 is a schematic block diagram illustrating the fluid composition preparation system for preparing two kinds of fluid compositions according to an embodiment of the present invention.
FIG. 12 is a view for explaining a preparation method performed in FIG. 11.
FIGS. 13 and 14 are views illustrating an example of a product prepared in FIG. 11.

### MODE FOR CARRYING OUT THE INVENTION

The terms used below are for the purpose of illustrating the present invention and are not intended to limit the present invention. As used herein, the phrases in the singular form include plural forms unless the context clearly dictates otherwise. The meaning of "comprising/including" as used in the specification specifies specific features, regions, integers, steps, operations, elements, and/or components and does not exclude the presence or addition of other specific properties, regions, integers, steps, operations, elements, components, and/or groups.

All terms including technical terms and scientific terms used in the present invention have the same meaning as commonly understood by those of ordinary skill in the art to which the present invention belongs. The terms commonly used and defined in the dictionary are further interpreted as having a meaning consistent with the present disclosure in conjunction with the relevant technical literature and are not to be construed as ideal or very formal unless defined to the contrary.

Hereinafter, it is assumed that the fluid composition includes a microcapsule. However, a size of the fluid composition is not limited to a micro unit.

Hereinafter, detailed embodiments of the present invention will be described in detail with reference to the accompanying drawings.

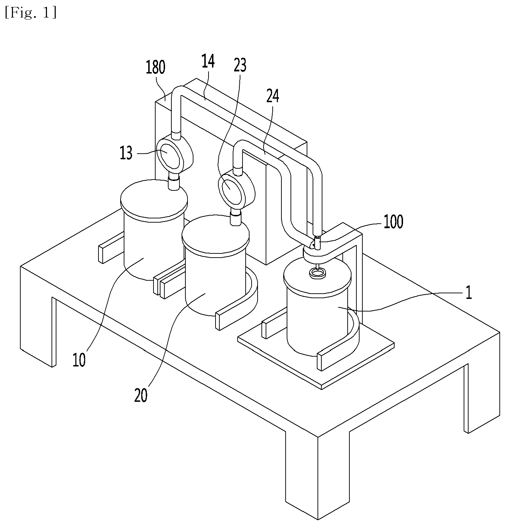

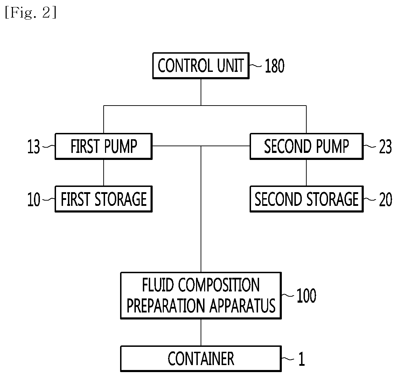

FIG. 1 is a schematic view of illustrating an example of a fluid composition preparation system according to an embodiment of the present invention, and FIG. 2 is a block diagram illustrating components constituting the fluid composition preparation system illustrated in FIG. 1.

A fluid composition preparation system according to an embodiment of the present invention may be constituted by at least a portion or the whole of a storage 10 storing a first fluid, a first pump 13 moving the first fluid stored in the first storage 10, a second storage 20 storing a second fluid, a second pump 23 moving the second fluid stored in the second storage 20, a control unit 180 controlling the first and second pumps 13 and 23, a fluid composition preparation apparatus 100 receiving the first fluid and the second fluid from the first and second pumps 13 and 23 to prepare a fluid composition, and a container 1 accommodating the fluid composition prepared in the fluid composition preparation apparatus 100.

Also, the fluid composition preparation system according to an embodiment of the present invention may further include other components that are not illustrated in FIGS. 1 and 2.

The first storage 10 may store the first fluid, and the second storage 20 may store the second fluid.

Here, the first fluid and the second fluid may be an oil phase and a water phase, or conversely, a water phase and an oil phase, respectively. Here, the oil phase may include all materials that are fat-soluble oil and are soluble in oil, and the water phase may include all materials that are water-soluble oil and are soluble in water.

The first pump 13 may move the first fluid stored in the first storage 10 to the fluid composition preparation apparatus 100. The first pump 13 may include a motor (not shown) supplying power for moving the first fluid stored in the first storage 10 and a first tube 14 that is a moving path of the first fluid.

Similarly, the second pump 23 may move the second fluid stored in the second storage 20 to the fluid composition preparation apparatus 100. The second pump 23 may include a motor (not shown) supplying power for moving the second fluid stored in the second storage 20 and a second tube 24 that is a moving path of the second fluid.

The control unit 180 may control the first pump 13 and the second pump 23. Particularly, the control unit 180 may drive the first pump 13 to move the first fluid or drive the second pump 23 to move the second fluid.

Also, the control unit 180 may control the first pump 13 to adjust a moving rate of the first fluid and control the second pump 23 to adjust a moving rate of the second fluid. The control unit 180 may adjust the moving rate of the first fluid and the moving rate of the second fluid to adjust a size or ratio of the fluid composition prepared in the fluid composition preparation apparatus 100. That is, the control unit 180 may control a first speed at which the first pump 13 is driven and a second speed at which the second pump 23 is driven to differently adjust the size or ratio of the fluid composition.

The fluid composition preparation apparatus 100 may receive the first fluid and the second fluid from the first pump 13 and the second pump 23 to prepare a fluid composition that is a two-phase fluid.

Here, the two-phase fluid may be a fluid in which two materials having different phases are formed to maintain an interface therebetween or may be a fluid formed by two materials having different electric charges.

The container 1 may receive and accommodate the fluid composition from the fluid composition preparation apparatus 100.

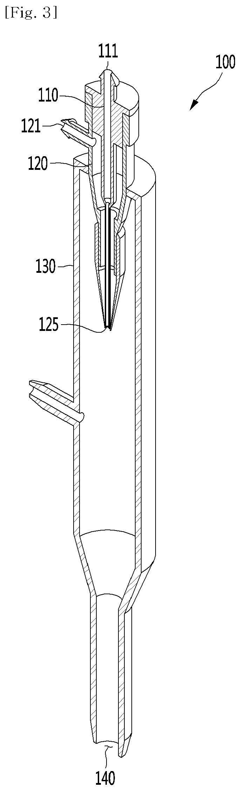

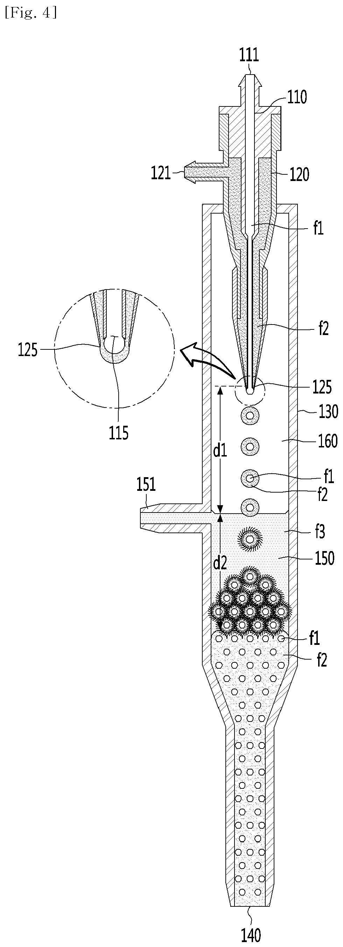

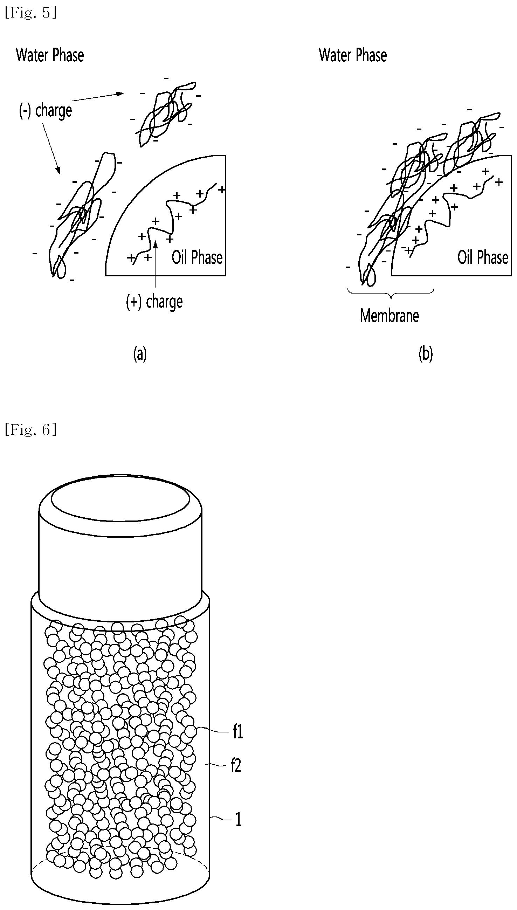

FIG. 3 is a view illustrating the inside of the fluid composition preparation apparatus according to an embodiment of the present invention, FIG. 4 is a cross-sectional view illustrating a process of preparing the fluid composition in the fluid composition preparation apparatus illustrated in FIG. 3, FIG. 5 is a view for explaining a principle of preparing the fluid composition in FIG. 4, and FIG. 6 is a view illustrating an example of a product prepared by the fluid composition preparation apparatus.

Referring to FIG. 3, the fluid composition preparation apparatus 100 may include a first guide member 110 guiding discharge of a first fluid f1, a second guide member 120 guiding discharge of a second fluid f2, a guide conduit 130 provided with a passage through which a fluid composition prepared by bonding the first fluid fl and the second fluid f2, which are discharged through the first and second guide members 110 and 120, to each other passes, and an opening 140 through which the fluid composition passing through the guide conduit 130 is distributed to the outside.

The first guide member 110 may have a through-hole that is vertically formed to guide the discharge of the first fluid so that the first fluid f1 flows downward. A first opening hole 111 into which the first fluid f1 is introduced may be formed in an upper end of the first guide member 110, and the first opening hole 111 may be connected to the first tube 14 connected to the first storage 10.

The first guide member 110 may be disposed within the second guide member 120.

A through-hole may be vertically formed in the second guide member 120. The through-hole formed in the second guide member 120 has a horizontal cross-sectional area greater than that of the first guide member 120. The first guide member 110 may be accommodated in the through-hole of the second guide member 120, and the second fluid f2 may be accommodated in a space that remains after accommodating the first guide member 110.

The first guide member 110 may be formed at a position corresponding to a vertical central axis of the second guide member 120, and the second fluid f2 may be guided to be discharged from the first guide member 110. Thus, the first fluid f1 discharged from the first guide member 110 may be accommodated into a just center of the second fluid f2 discharged from the second guide member 120.

A second opening hole 121 into which the second fluid f2 is introduced may be formed in the second guide member 120. Referring to an example illustrated in FIGS. 3 and 4, the second opening hole 121 may be formed on one point of a side surface of the second guide member 120. The second opening hole 121 may be connected to the second pump 23 connected to the second storage 20. The second fluid f2 passing through the second pump 23 from the second storage 20 may be injected into an inner space of the second guide member 120 through the second opening hole 121.

A discharge hole 115 may be formed in a lower end of the first guide member 110, and the first fluid f1 passing through the first guide member 110 may be discharged from the discharge hole 115.

A discharge part 125 may be formed in a lower end of the second guide member 120. The first fluid f1, the second fluid f2, or the fluid composition in which the first fluid f1 and the second fluid f2 are bonded to each other, which are guided from the first guide member 110 or the second guide member 120, may be discharged from the discharge part 125.

The discharge hole 115 may be formed at a height that is equal to or higher than the discharge part 125 in the vertical direction. Preferably, the discharge hole 115 may be formed at a height higher than that of the discharge part 125.

The first fluid f1 discharged from the discharge hole 115 may be accommodated within the second fluid f2 in the discharge part 125 and then bonded to each other in the form of a droplet. Here, each of the first fluid f1 and the second f2 may be oily and aqueous or aqueous and oily, respectively. Thus, the first fluid f1 and the second fluid f2 may not be mixed with each other.

Referring to FIG. 5, the oil phase may contain a polymer material having a positive (+) charge, and the water phase may contain a polymer material having a negative (-) charge. Thus, in a state in which the oil phase and the water phase are spaced apart from each other as illustrated in FIG. 5(a), when the oil phase and the water phase are disposed adjacent to each other as illustrated in FIG. 5(b), an interface may be formed between the oil phase and the water phase due to interaction between the positive (+) charge and the negative (-) charge, and thus, the oil phase and the water phase may be maintained in a shape in which the oil phase and the water phase are not mixed with each other. According to an embodiment, the oil phase may be isononyl isononanoate + amodimethicone (ININ), and the water phase may be carbomer. However, this is merely an example, and each of the phases may include all polymers having different charges.

Also, according to an embodiment, the fluid composition may be prepared in the form of a capsule. Here, the fluid composition may be gelated by the polymer material having the positive (+) charge. For this, materials such as alginate, pectine, chitosan Arabic gums, cellulose derivatives, starches, gelatins, and gellan gum may be used.

The fluid composition formed in and discharged from the discharge part 125 may pass through the guide conduit 130. Then, the fluid composition passing through the guide conduit 130 may be distributed to the outside by passing through the opening 140.

An air layer 160 filled with air and a shock-absorbing layer 150 may be formed in the guide conduit 130. The shock-absorbing layer 150 may minimize deformation in shape of the fluid composition.

The discharge part 125 may be disposed on the air layer 160, and the fluid composition discharged from the discharge part 125 may pass through the air layer 160. As described above, when the fluid composition prepared in the shape in which the first fluid f1 and the second fluid f2 are accommodated is formed to be moved first in the air, the spherical shape of the fluid composition may be preserved and maintained by repulsive force between the air and the first fluid f1 and bonding force between the first fluids f1, and bonding force between the second fluids f2.

As described above, the discharge part 125 may be disposed to be spaced a preset reference distance d1 or more from the shock-absorbing layer 150 to preserve and maintain the shape of the fluid composition. That is, when the fluid composition is formed in the discharge part 125, since the first fluid f1 is leaned to a relative upper side, a minimum time taken to stay in the air layer 160 may be secured so that the second fluid f2 surrounds the first fluid f1 while being moved in the air layer 160.

The reference distance d1 between the discharge part 125 and the shock-absorbing layer 150 may vary according to kinds of first fluid f1 and second fluid f2 and a size of the fluid composition. Particularly, as the fluid composition increases in size, the reference distance d1 between the discharge part 125 and the shock-absorbing layer 150 may increase. For example, the discharge part 125 and the shock-absorbing layer 150 may be formed to be spaced at least 2 cm from each other.

Also, since a moving rate of the fluid composition passing through the air layer 160 is relatively high, the spaced distance may be maintained between the fluid compositions being moved.

The shock-absorbing layer 150 may be formed below the air layer 160. Thus, the fluid composition passing through the air layer 160 may be accommodated in the shock-absorbing layer 150.

The shock-absorbing layer 150 may include a third fluid f3. A vertical moving rate of the fluid composition accommodated in the shock-absorbing layer 150 may decrease by the third fluid f3 contained in the shock-absorbing layer 150, and thus, the deformation in shape of the fluid composition may be minimized.

Also, the fluid composition may be temporarily stacked on the shock-absorbing layer 150, and a distance between one fluid composition and the other fluid composition may decrease while being stacked on the shock-absorbing layer 150. Thus, the bonding force between the first fluids f1 forming an outer surface of the fluid composition may increase, and thus, the first fluids f1 may be combined with each other. Here, the fluids f2 respectively accommodated in the fluid compositions may be maintained to be spaced a predetermined distance from each other.

The third fluid f3 may have density less than that of the second fluid f2. Thus, the fluid composition containing the first fluid f1 and the second fluids f2 that are maintained at a predetermined distance within the first fluid f1 may be moved below the shock-absorbing layer 150.

Also, the shock-absorbing layer 150 may be injected into the guide conduit 130 through a third opening hole formed in a side surface of the guide conduit 130. The third fluid f3 may be injected so that the shock-absorbing layer 150 is formed at a preset predetermined height d2 and also may have a height at which the fluid compositions accommodated in the shock-absorbing layer 150 do not collide with each other. As the fluid composition increases in size, and the formation rate of the fluid composition increase, the shock-absorbing layer 150 may increase in height.

The fluid composition passing through the shock-absorbing layer 150 may be distributed to the outside through the opening 140.

The fluid composition distributed from the opening 140 may be contained in the container 1. As illustrated in FIG. 6, the first fluids f1 and the second fluids f2 may be contained in the container 1. Here, the first fluids f1 may be maintained to be spaced a predetermined distance from each other, and the second fluids f2 may be maintained to be combined with each other.

According to another embodiment of the present invention, the shock-absorbing layer may be disposed outside the fluid composition preparation apparatus.

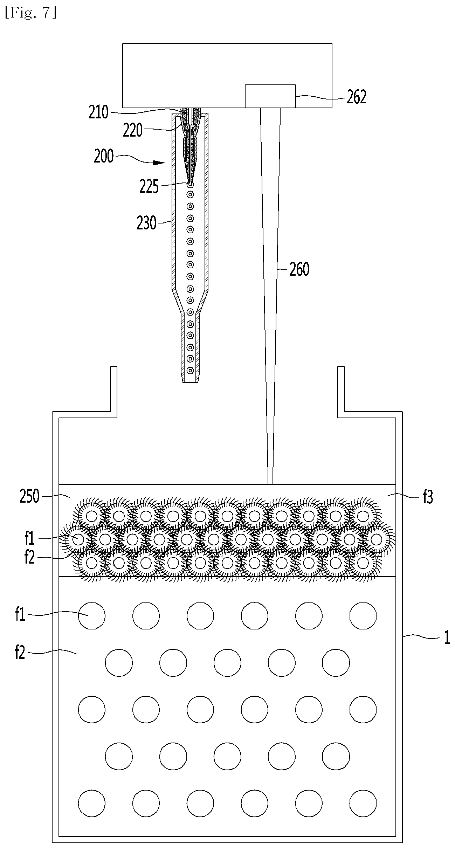

FIG. 7 is a view illustrating a fluid composition preparation system according to another embodiment of the present invention.

A fluid composition preparation apparatus 200 according to another embodiment of the present invention may include a first guide member 210 guiding a first fluid f1, a second guide member 220 guiding a second fluid f2, and a guide conduit 230 through which a fluid composition discharged from the first and second guide members 210 and 220 passes. A discharge part 225 in which the fluid composition in which the first fluid f1 and the second fluid f2 are accommodated is formed may be provided in a lower end of the second guide member 220.

The fluid composition preparation apparatus 200 according to a second embodiment may not include a shock-absorbing layer. However, a shock-absorbing layer may be formed in a container 1 in which the fluid composition prepared in the fluid composition preparation apparatus 200 is accommodated.

That is, a fluid composition preparation system according to another embodiment of the present invention may include the fluid composition preparation apparatus 200, a container 1, and a charging/suction member 260 filling a third fluid f3 into the container 1 and suctioning the third fluid f3. The filling/suction member 260 may further include a motor 262 for injecting the third fluid f3 into the container 1 or suctioning the third fluid f3 injected into the container 1.

In addition, as illustrated in FIG. 7, the fluid composition preparation system may further include other components such as the above-described first storage. Hereinafter, the same content as described above will be omitted.

A fluid composition prepared in a discharge part 225 may pass through the inside of a guide conduit 230 filled with air. The fluid composition passing through the guide conduit 230 may be accommodated directly in the container 1.

A shock-absorbing layer 250 formed of the third fluid f3 may be provided in the container 1, and the fluid composition may be stabilized in the shock-absorbing layer 250. That is, the fluid compositions may be stacked adjacent to each other while staying in the third fluid f3.

The fluid compositions passing through the shock-absorbing layer 250 may be maintained at a predetermined distance, and the second fluids f2 may be formed and maintained in the combined state.

A direct injection-type fluid composition preparation system may move the fluid composition in the same manner as illustrated in FIG. 7.

A fluid composition preparation system according to further another embodiment of the present invention may be a storage type.

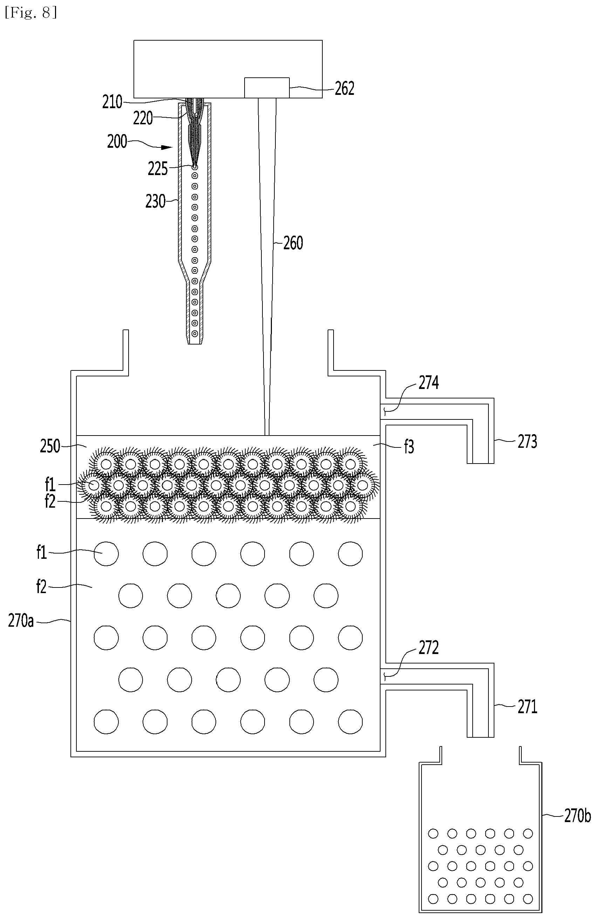

FIG. 8 is a view illustrating a fluid composition preparation system according to further another embodiment of the present invention.

Referring to FIG. 8, a fluid composition preparation system may include a fluid composition preparation apparatus 200 described with reference to FIG. 7, an intermediate container 270a, a charging/suction member 260 charging a third fluid f2 into the intermediate container 270a and suctioning the third fluid f2, and a storage container 270b receiving a fluid composition accommodated in the intermediate container 270a.

The intermediate container 270a may receive and accommodate the third fluid f3 through the charging/suctioning member 260 and may receive the fluid composition from the fluid composition preparation apparatus 200 to stabilize the fluid composition. The stabilized fluid composition may be moved to the storage container 270b through an intermediate conduit 271. That is, the intermediate conduit 271 for moving the fluid composition to the storage container 270b may be connected to the intermediate container 270a, and the intermediate conduit 271 may be connected to a moving hole 272 formed in a lower portion of the intermediate container 270a.

The intermediate container 270a may include an overflow conduit 273 to prevent the fluid composition or a shock-absorbing layer 250 from overflowing. The overflow conduit 273 may be connected to a prevention hole 274 formed in an upper portion of the intermediate container 270a.

As illustrated in FIG. 8, there is an advantage that the fluid composition is prepared and stored in the intermediate container 270a and then moved to the storage container 270b by a necessary amount.

According to the fluid composition preparation system according to at least one embodiment, which is described above, a droplet in which two phase fluids are bonded to each other, may be prepared, and when the droplet is moved, the droplet may be maintained in shape. Thus, the double droplets having the same size may be formed, and deformation of the droplets may be minimized during the movement.

The fluid composition preparation system according to at least one embodiment, which is described above, may include a plurality of fluid composition preparation apparatus. In this case, different fluid compositions may be prepared, or two kinds of fluid compositions may be prepared.

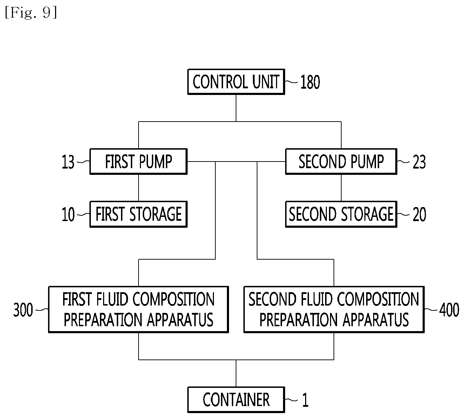

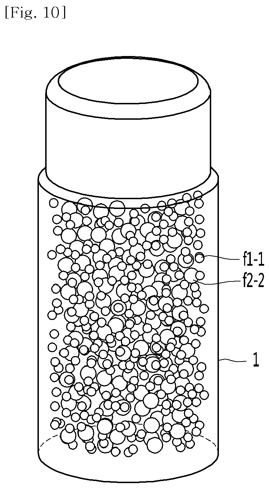

FIG. 9 is a schematic block diagram illustrating the fluid composition preparation system for preparing fluid compositions having different sizes according to an embodiment of the present invention, and FIG. 10 is a view illustrating an example of a product prepared in FIG. 9.

A fluid composition preparation system may include a first storage 10 storing a first fluid f1, a first pump 13 moving the first fluid f1 stored in the first storage 10, a second storage 20 storing a second fluid f2, a second pump 23 moving the second fluid f2 stored in the second storage 20, a control unit 180 controlling the first and second pumps 13 and 23, a first fluid composition preparation apparatus 300 preparing a first fluid composition, a second fluid composition preparation apparatus 400 preparing a second fluid composition, and a container 1 accommodating the first fluid composition and the second fluid composition.

Here, the first fluid composition preparation apparatus 300 and the second fluid composition preparation apparatus 400 may have the same structure as one of the above-described fluid composition preparation apparatuses. However, the first fluid composition preparation apparatus 300 and the second fluid composition preparation apparatus 400 may be differently controlled in amount or rate of supply of the first fluid f1 and the second fluid f2 from the first and second pumps 13 and 14. Thus, the first fluid composition preparation apparatus 300 and the second fluid composition preparation apparatus 400 may produce the fluid compositions, each of which has the droplet shape in which the first fluid f1 is accommodated in the second fluid f2, but having sizes different from each other. Alternatively, all of the fluid compositions may have the same size but have different ratios of the first fluid f1 and the second fluid f2.

For example, as illustrated in FIG. 10, the fluid composition stored in the container 1 may be in a state in which the second fluids f2 are combined with each other, and the first fluids f1-1 and f1-2 are maintained to be spaced a predetermined distance from each other. Here, the first fluids f1-1 and f1-2 may include a first-1 fluid f1-1 formed in the first fluid composition preparation apparatus 300 and a first-2 fluid formed in the second fluid composition preparation apparatus 400. That is, the first-1 fluid f1-1 and the first-2 fluid f1-2 may have the same material or have sizes different from each other.

As described above, according to an embodiment of the present invention, the fluid composition having the sizes different from each other may be prepared. Also, since each of the fluid composition preparation apparatuses is manufactured, the relatively uniform fluid compositions may be prepared.

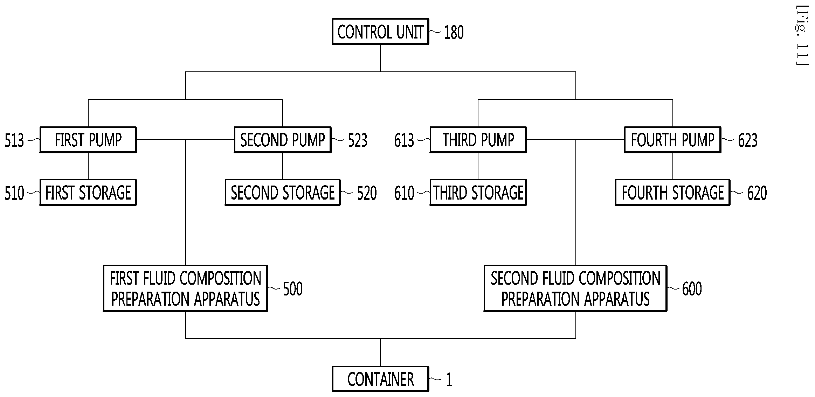

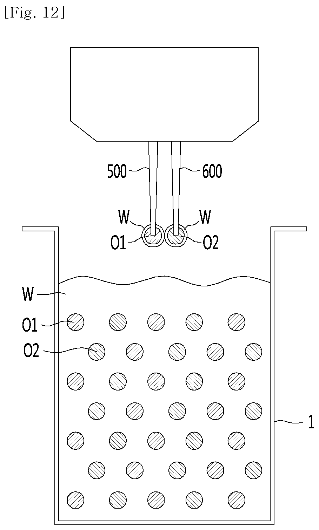

FIG. 11 is a schematic block diagram illustrating the fluid composition preparation system for preparing two kinds of fluid compositions according to an embodiment of the present invention, FIG. 12 is a view for explaining a preparation method performed in FIG. 11, and FIGS. 13 and 14 are views illustrating an example of a product prepared in FIG. 11.

Referring to FIG. 11, a fluid composition preparation system may include a first storage 510 storing a first fluid f1, a first pump 513 moving the first fluid f1 stored in the first storage 510, a second storage 520 storing a second fluid f2, a second pump 523 moving the second fluid f2 stored in the second storage 520, a first fluid composition preparation apparatus 500 preparing a first fluid composition, a third storage 610 storing a third fluid f3, a third pump 613 moving the third fluid f1 stored in the third storage 610, a fifth storage 620 storing a fourth fluid f4, a fourth pump 623 moving the fifth fluid f4 stored in the fifth storage 620, a third fluid composition preparation apparatus 600 preparing a third fluid composition, a control unit 180 controlling the first to fourth pumps 513, 523, 612, and 623, and a container 1 accommodating the first fluid composition and the second fluid composition.

Here, the first fluid composition preparation apparatus 500 and the second fluid composition preparation apparatus 600 may have the same structure as one of the above-described fluid composition preparation apparatuses. However, the first fluid composition preparation apparatus 500 may prepare a fluid composition having a droplet shape in which the first fluid f1 is accommodated in the second fluid f2, and the second fluid composition preparation apparatus 600 may prepare a fluid composition having a droplet shape in which the third fluid f3 is accommodated in the fourth fluid f4. In some cases, the second fluid f2 and the fourth fluid f4 may be the same material, but is not limited thereto.

Hereinafter, for convenience of description, it is assumed that the first fluid f1 has a first oil phase 01, the second fluid f2 has a water phase W, the third fluid f3 has a second oil phase O2, and the fourth fluid f4 has the same water phase W as the second fluid f2.

In this case, as illustrated in FIG. 12, the first fluid composition preparation apparatus 500 forms the first fluid composition having the water phase W in which the first oil phase O1 is accommodated, and the second fluid composition preparation apparatus 600 forms the second fluid composition having the water phase W in which the second oil phase O2 is accommodated.

Thus, the water phase W may be combined in the container 1 to form a fluid composition in which the first oil O1 and the second oil O2 are uniformly distributed to be spaced a predetermined distance from each other.

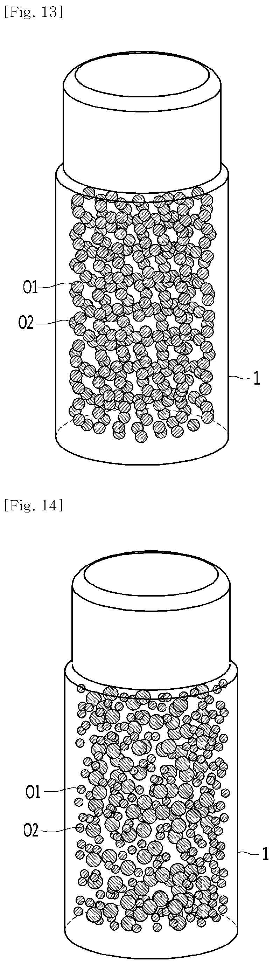

When the control unit 180 controls a first driving speed of the first and second pumps 513 and 523 and a second driving speed of the third and fourth pumps 613 and 623 so as to be the same, a product illustrated in FIG. 13 may be produced, and when the first driving speed and the second driving speed are controlled to be different from each other, a product illustrated in FIG. 14 may be produced.

As described above, according to various embodiments of the present invention, there is an advantage that the droplet formed in the double layer is relatively stably prepared and moved, and the droplets having the various sizes and the two kinds of droplets are prepared. Also, there is an advantage that the number of droplets is more uniform through the plurality of fluid composition preparation apparatuses.

Although the two kinds of fluid compositions are illustrated as an example in FIGS. 11 to 14, two or more kinds of fluid compositions may be prepared.

Although the embodiment of the present invention is described with reference to the accompanying drawings, those with ordinary skill in the technical field of the present invention pertains will be understood that the present invention can be carried out in other specific forms without changing the technical idea or essential features.

Thus, the above-disclosed embodiments are to be considered illustrative and not restrictive. Accordingly, the scope of the present invention is defined by the appended claims rather than description and the exemplary embodiments described therein. Various modifications made within the meaning of an equivalent of the claims of the invention and within the claims are to be regarded to be in the scope of the present invention.

## Claims

1. A fluid composition preparation apparatus comprising:
a first guide member configured to guide discharge of a first fluid;
a second guide member in which the first guide member is disposed, which is disposed outside the first guide member to guide discharge of a second fluid, and which has a discharge part configured to discharge a droplet-type fluid composition in which the first fluid is accommodated in the second fluid;
a guide conduit having a passage through which the fluid composition passes; and
an opening configured to distribute the fluid composition passing through the guide conduit to the outside,
wherein a shock-absorbing layer through which the fluid composition discharged from the second guide member passes is provided in the guide conduit.

2. The fluid composition preparation apparatus according to claim 1, wherein the shock-absorbing layer comprises a third fluid, and
the third fluid has a density less than that of the second fluid.

3. The fluid composition preparation apparatus according to claim 1, wherein an air layer filled with air is formed in the guide conduit, and
the discharge part is disposed on the air layer.

4. The fluid composition preparation apparatus according to claim 3, wherein the shock-absorbing layer is disposed below the air layer to minimize deformation of the fluid composition passing through the air layer.

5. The fluid composition preparation apparatus according to claim 1, wherein the discharge part is disposed to be spaced a preset reference distance or more from the shock-absorbing layer.

6. The fluid composition preparation apparatus according to claim 5, wherein the reference distance increases as the fluid composition increases in size.

7. The fluid composition preparation apparatus according to claim 1, wherein each of the first fluid and the second fluid has one of an oil phase and a water phase.

8. A product prepared by the fluid composition preparation apparatus according to any one of claims 1 to 7.

9. A fluid composition preparation system comprising:
at least one or more fluid composition preparation apparatuses, each of which comprises a first guide member configured to guide discharge of a first fluid, a second guide member which guides discharge of a second fluid and which has a discharge part for discharging a droplet-type fluid composition in which the first fluid is accommodated in the second fluid, a guide conduit having a passage through which the fluid composition passes, and an opening configured to distribute the fluid composition passing through the guide conduit to the outside;
a first storage configured to store the first fluid;
a first pump configured to move the first fluid stored in the first storage to the first guide member;
a second storage configured to store the second fluid;
a second pump configured to move the second fluid stored in the second storage to the second guide member; and
a control unit configured to control the first pump and the second pump,
wherein a shock-absorbing layer through which the fluid composition discharged from the second guide member passes is provided in the guide conduit.

10. The fluid composition preparation system according to claim 9, wherein the shock-absorbing layer comprises a third fluid, and
the third fluid has a density less than that of the second fluid.

11. The fluid composition preparation system according to claim 9, wherein an air layer filled with air is formed in the guide conduit, and
the discharge part is disposed on the air layer.

12. The fluid composition preparation system according to claim 11, wherein the shock-absorbing layer is disposed below the air layer to minimize deformation of the fluid composition passing through the air layer.

13. The fluid composition preparation system according to claim 9, wherein the discharge part is disposed to be spaced a preset reference distance or more from the shock-absorbing layer.

14. The fluid composition preparation system according to claim 13, wherein the reference distance increases as the fluid composition increases in size.

15. The fluid composition preparation system according to claim 9, wherein each of the first fluid and the second fluid has one of an oil phase and a water phase.

16. The fluid composition preparation system according to claim 9, further comprising at least one or more containers configured to accommodate the fluid composition that is distributed from the opening.

17. The fluid composition preparation system according to claim 9, wherein the control unit controls a first speed at which the first pump is driven and a second speed at which the second pump is driven to adjust a size of the fluid composition.
